Europäisches Patentamt

**European Patent Office**

Office européen des brevets

(19)

(11) Numéro de publication :

**0 010 488
B1**

(12)

# FASCICULE DE BREVET EUROPÉEN

(45) Date de publication du fascicule du brevet :
07.04.82

(21) Numéro de dépôt : 79400738.5

(22) Date de dépôt : 12.10.79

(51) Int. Cl.³ : **H 04 N   9/02, H 04 N   9/52**

(54) **Dispositif de décodage couleur.**

(30) Priorité : 13.10.78 FR 7829214

(43) Date de publication de la demande :
30.04.80 (Bulletin 80/09)

(45) Mention de la délivrance du brevet :
07.04.82 Bulletin 82/14

(84) Etats contractants désignés :
**AT BE CH DE GB IT NL SE**

(56) Documents cités :
FR - A - 2 343 384

(73) Titulaire : SONOTEC, Société Nouvelle de Produits et
Techniques
5, rue François Ponsard.
F-75016 Paris (FR)

(72) Inventeur : Deban, Gilles
19 rue du Lieutenant Colonel Le Sabazec
F-78220 Viroflay (FR)

(74) Mandataire : L'Helgoualch, Jean et al
OFFICE PICARD 134 Boulevard de Clichy
F-75018 Paris (FR)

Imprimerie Jouve, 18, rue St-Denis, 75001 Paris, France

**0 010 488**

## Dispositif de décodage couleur

La présente invention a pour objet un dispositif de décodage couleur permettant à partir d'une source de signaux codés conformément au système NTSC en usage notamment aux Etats-Unis d'Amérique, d'obtenir des signaux susceptibles d'être envoyés vers des appareillages fonctionnant selon des codages pouvant être différents : par exemple SECAM, PAL ou même NTSC ou encore en R.V.B. (rouge vert et bleu) sous forme de données utilisables directement par branchement sur une prise spéciale. Plus précisément, il devient de plus en plus fréquent de devoir rendre compatibles divers éléments d'une installation fonctionnant selon des normes différentes, et en particulier des appareillages de commande, de mesure, de calcul, de mémoire, de traitement d'information de type NTSC dont l'affichage doit être réalisé sur un tube cathodique à codage couleurs différent. Pour fixer les idées, dans ce qui suit, à titre illustratif, on se référera à un ordinateur NTSC et un affichage SECAM, étant entendu que d'autres sources d'information ou d'autres codages à l'affichage peuvent être envisagés par l'homme de l'Art sans sortir du cadre de la présente invention.

L'un des buts de la présente invention est donc de décoder des informations couleurs codées en NTSC en vue de leur utilisation ultérieure en un système éventuellement différent.

Un autre but de l'invention est, si on le désire, de changer la gamme des couleurs programmables par un simple changement d'éléments de circuits.

Selon le système NTSC le codage couleur est basé sur une relation de phase avec le signal de référence chrominance à 3,58 MHz correspondant à une période de 280 nanosecondes. Le signal vidéo est échantillonné à 14,32 MHz, de sorte que l'information élémentaire correspond à une période de 70 nanosecondes. On dispose donc de 4 éléments d'information couleur par période de référence de 280 nanosecondes, ce qui correspond à $2^4 = 16$ états possibles, soit 16 couleurs différentes.

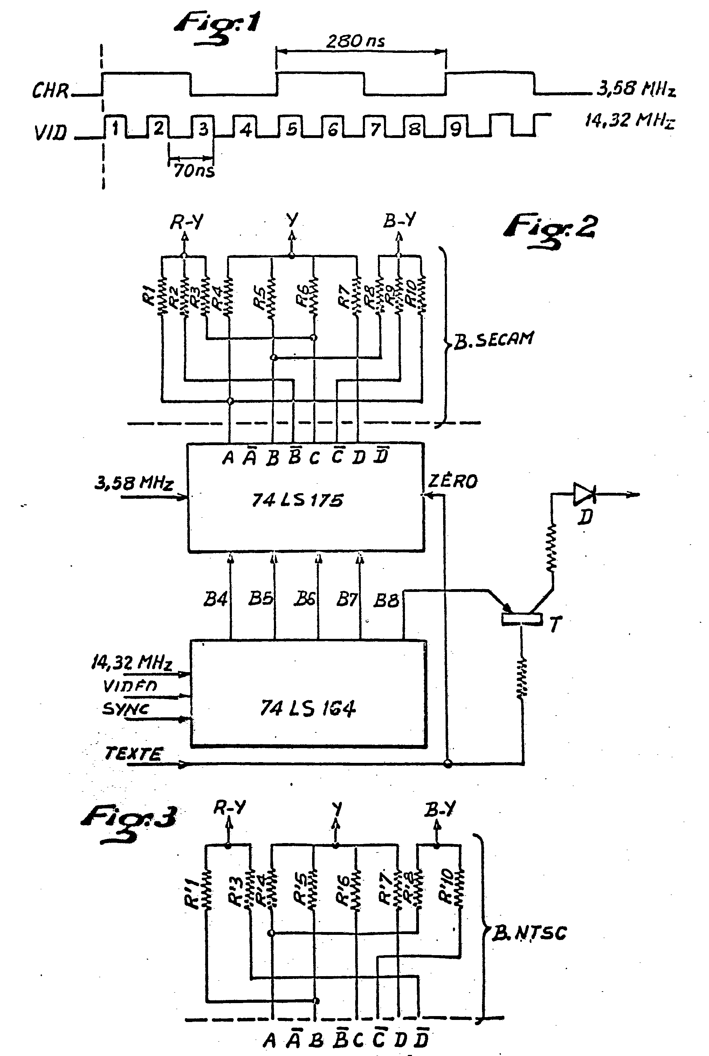

A la figure 1 on a représenté schématiquement les signaux de chrominance CHR et vidéo VID. Ici, pour simplifier et à titre purement illustratif, tous les signaux sont constants.

Selon la présente invention, on pratique le décodage en réalisant un décalage série à 14,32 MHz et un échantillonnage parallèle de 4 bits à 3,58 MHz. Mais au niveau de la qualité du décodage peut se présenter un problème dû au fait que si l'on pratique le décalage série, le premier bit (1, fig. 1) est décalé à 70 nanosecondes augmentées du temps de propagation dans le circuit.

Il existe donc un retard par rapport au signal de référence qui peut être gênant. Selon la présente invention cet inconvénient est écarté en décalant l'échantillonnage d'une période de référence ce qui n'a pas d'influence au niveau vidéo puisqu'on recrée entièrement le signal correspondant. Ceci offre l'avantage de réaliser un décodage précis et sans défaut dans lequel les délais de propagation n'interviennent pas. On entre donc, selon la présente invention, le signal vidéo en série que l'on décode à 14,32 MHz et on échantillonne en parallèle les bits 4 à 7 (fig. 1) à la fréquence de 3,58 MHz. Comme on le verra ci-dessous on utilise pour cela un quadruple portier à bascule sortant quatre informations binaires et leurs compléments.

Par un matriçage adéquat de ces signaux et de leurs compléments, on obtient les signaux de luminance Y et de chrominance R-Y et B-Y. Le matriçage est réalisé par des résistances qui, selon une particularité de l'invention, sont montées en un bloc amovible ci-après dénommé « bouchon » ce qui permet de changer la gamme de couleurs programmables. De plus, le dispositif permet ainsi de s'adapter à toute forme de codage à la sortie notamment en vue de l'affichage.

Comme on le verra ci-dessous, les dispositifs conformes à la présente invention permettent, de plus, de traiter le texte qui dans certaines sources d'informations n'est pas « blanc » mais est constitué discrètement par des signaux de couleurs complémentaires.

Pour mieux faire comprendre les caractéristiques techniques et les avantages de la présente invention, on va en décrire un exemple de réalisation, étant entendu que celui-ci n'est pas limitatif quant à son mode de mise en œuvre et aux applications qu'on peut en faire.

On se référera à la figure 1 ci-dessus décrite, et aux figures 2 et 3 qui représentent des schémas de circuits de décodage couleur et de formation texte : la figure 2 présente entre autres un « bouchon » pour codage « SECAM », la figure 3 un « bouchon » pour codage NTSC. Sur ces figures et pour simplifier ne sont représentés ni les sources de signaux à traiter ni les circuits d'affichage. A la figure 2, le circuit de décodage est essentiellement constitué par deux circuits intégrés pouvant être respectivement du type 74 LS 164 et 74 LS 175.

Le premier circuit dit de décalage reçoit les signaux vidéo à l'entrée des informations, le signal de synchronisation SYNC à l'entrée de remise à zéro et les signaux de référence à 14,32 MHz. A la sortie, on recueille les bits 4 à 7 (fig. 1) en B4, B5, B6 et B7 ; ceux-ci sont amenés au quadruple portier 74 LS 175 alimenté en 3,58 MHz et qui émet les signaux A, B, C, D et leurs compléments respectifs A, B, C et D. Le fonctionnement de cet ensemble est décrit dans le préambule ci-dessus : on y réalise essentiellement le décalage série à 14,32 MHz dans le circuit décaleur, qui sera suivi dans une seconde phase de l'échantillonnage parallèle de 4 bits (B4 à B7) à la fréquence de 3,58 MHz à l'aide du quadruple portier. Le « bouchon » B. SECAM (fig. 2) est constitué par un ensemble de résistances R1 à R10 à la sortie desquelles on recueille les signaux luminance Y et de chrominance R-Y et B-Y, le matriçage effectué à travers ces résistances est effectué comme indiqué au tableau 1. Sur ce même tableau on a porté des valeurs des diverses résistances, à titre illustratif, ces différentes valeurs présentant à l'expérience l'avantage d'avoir donné des résultats particulièrement satisfaisants.

En ce qui concerne le traitement du texte, certaines sources, comme cela a été mentionné plus haut, émettent des signaux correspondant discrètement à deux couleurs complémentaires : par exemple vert et violet. En se reportant à la figure 2, on utilise le signal TEXTE que l'on emploie pour réaliser un court-circuit vidéo à l'aide de l'ensemble organisé autour du transistor T et de la diode D entre le 8$^e$ bit du circuit décaleur et l'entrée du circuit de mélange luminance de l'affichage. Ceci est réalisé à l'aide du circuit collecteur émetteur du transistor recevant à sa base les signaux de texte. On obtient un découplage par la diode qui injecte la vidéo texte. Il en résulte la saturation de luminance. La remise à zéro (ZERO) du circuit portier échantillonneur assure le débrayage de la chrominance par mise au repos des signaux correspondants.

Il est évident que ce qui vient d'être décrit à titre d'exemple illustratif peut trouver de nombreux autres emplois pour lesquels l'homme et l'Art choisira les composants et leurs valeurs les plus adaptées au problème à résoudre tout en restant dans le cadre de la définition de l'invention.

TABLEAU I

| BOUCHON à CODAGE | SIGNAUX | | RESISTANCES | | SORTIE DU PORTIER |
|---|---|---|---|---|---|
| | | | REPERES | VALEURS | |
| SECAM | Luminance Y | | R4 | 1 | A |
| | | | R5 | 2,2 | B |
| | | | R6 | 4,7 | C |
| | | | R7 | 10 | D |
| | Chrominance | R-Y | R1 | 4,7 | A |
| | | | R2 | 2,2 | B |
| | | | R3 | 10 | C |
| | | B-Y | R8 | 10 | B |
| | | | R9 | 2,2 | C |
| | | | R10 | 4,7 | D |
| NTSC | Luminance Y | | R'4 | 2,2 | A |
| | | | R'5 | 2,2 | B |
| | | | R'6 | 2,2 | C |
| | | | R'7 | 2,2 | D |
| | Chrominance | R-Y | R'1 | 2,2 | B |
| | | | R'3 | 2,2 | D |
| | | B-Y | R'8 | 2,2 | A |
| | | | R'10 | 2,2 | C |

**Revendications**

1. Dispositif décodeur couleur pour signaux vidéo issus d'une source à codage NTSC en vue de leur codage en un système de codage prédéterminé caractérisé par le fait qu'il comprend un circuit de décalage recevant les signaux vidéo en série et les décalant à la fréquence de référence (14,32 MHz) caractéristique du signal NTSC, et transmettant en parallèle 4 bits (B4 à B7) à un portier qui les échantillonne à une fréquence (3,58 MHz) égale au 1/4 de la fréquence de référence, les échantillons des quatre bits (A, B, C, D) et leurs compléments ($\bar{A}$, $\bar{B}$, $\bar{C}$, $\bar{D}$) étant, à la sortie du portier, appliqués aux entrées d'une matrice de résistances (R1 à R10) elle-même reliée à un dispositif d'affichage.

2. Dispositif selon la revendication 1 caractérisé par le fait que la matrice de résistance (R1 à R10) est montée sur un bloc amovible interchangeable, chaque bloc correspondant à un codage déterminé.

3. Dispositif selon la revendication 2 caractérisé par le fait que le bloc amovible correspond à une gamme de couleurs déterminée.

4. Dispositif selon l'une quelconque des revendications 1 à 3 caractérisé par le fait que les bits transmis en parallèle au portier sont fournis par les sorties (B4 à B7) des quatrième à septième étages du circuit de décalage.

5. Dispositif selon l'une quelconque des revendications 1 à 4, caractérisé par le fait qu'un signal de texte est appliqué à l'entrée de remise à zéro du portier et à l'entrée de commande d'un ensemble de court-circuit vidéo (T.D.) disposé entre la sortie du 8ᵉ bit du circuit de décalage et une sortie du dispositif décodeur reliée à l'entrée du circuit de mélange luminance du dispositif d'affichage.

6. Dispositif selon la revendication 5 caractérisé par le fait que l'ensemble de court-circuit est constitué par un transistor (T) dont la base constitue l'entrée de commande de l'ensemble, dont l'émetteur est relié à la sortie du 8ᵉ étage (B8) du circuit de décalage et dont le collecteur est relié, par l'intermédiaire d'une diode (D), à l'entrée du circuit de mélange luminance du dispositif d'affichage.

## Claims

1. A colour decoding device for video signals from an NTSC coding source with respect to their coding in any predetermined system, characterized by the fact that it includes a shifting circuit receiving series video signals, displacing them at the reference frequency (14.32 MHz) and transmitting 4 bits (B4-B7) in parallel to a latch circuit which samples them at a frequency (3.58 MHz) equal to one fourth of the reference frequency, four signals (A, B, C, D) and their complements (A, B, C, D,) being produced by the latch circuit and being transmitted to the input of a matrix of resistors (R1-R10) connected with a display device.

2. A device according to claim 1 wherein the matrix of resistors (R1-R10) is mounted on a removable card, each card corresponding to a specific coding.

3. A device according to claim 2 wherein the card corresponds to a particular spectrum of colours.

4. A device according to any one of claims 1 to 3 wherein the bits transmitted in parallel to the latch circuit are emitted by the bits (B4-B7) of the fourth to seventh stages of the latch circuit.

5. A device according to any one of claims 1 to 4 wherein a text signal is fed to the zero-setting input of the latch circuit, and to the input of a video short circuit (T, D) placed between the output of the eighth bit of the shifting circuit and an input of the decoding device connected with the input of the luminance mixing circuit of the display.

6. A device according to claim 5 wherein the short circuit group comprises a transistor (T) where the base is the input of the control, the emitter is connected with the output of the 8th bit (B8) of the shifting circuit, and the collector is connected with the input of the luminance mixing circuit of the display, through a diode (D).

## Ansprüche

1. Farb-decodiereinrichtung für Videosignale aus einer NTSC-Codierschaltung mit dem Zweck, die Signale in ein bestimmtes Codiersystem umzusetzen, dadurch gekennzeichnet, dass das System mit einer Verschiebungsschaltung ausgerüstet ist, die die aufeinanderfolgenden Videosignale auffängt und entsprechend der charakteristischen Bezugsfrequenz (14,32 MHz) des NTSC-Signals verschiebt und parallel 4 Bit (B4 bis B7) zu einem Träger überträgt, wo sie bei einer Frequenz (3,58 MHz, d.h. 1/4 der Bezugsfrequenz) zerlegt werden, wobei die Muster der 4 Bit (A, B, C, D) und deren Komplemente (A, B, C, D) am Ausgang der Trägers an die verschiedenen Eingänge einer Widerstandsmatrix (R1 bis R10) angelegt werden und die Matrix selbst an ein Anzeigegerät angeschlossen ist.

2. Einrichtung nach Anspruch 1 dadurch gekennzeichnet, dass die Widerstandsmatrix (R1 bis R10) auf einen auswechselbaren Block montiert ist, wobei jeder Block einer bestimmten Codierung entspricht.

3. Einrichtung nach Anspruch 2 dadurch gekennzeichnet, dass der auswechselbare Block einem bestimmten Farbprogramm entspricht.

4. Einrichtung nach eines der Anspruche 1 bis 3, dadurch gekennzeichnet, dass die parallel zum Träger übertragenen Bit durch die Ausgänge (B4 bis B7) der vierten bis siebten Stufe der Verschiebungsschaltung geliefert werden.

5. Einrichtung nach eines der Anspruche 1 bis 4 dadurch gekennzeichnet, dass ein Textsignal am Eingang der Nullstellung des Trägers und am Steuereingang eines Videokurzschlussgeräts (T, D)

4

**0 010 488**

angelegt wird, wobei das Kurzschlussgerät zwischen dem Ausgang des 8. Bit der Verschiebungsschaltung und einem Ausgang der Decodiereinrichtung angeordnet ist, und der Ausgang des Decodiereinrichtung an den Eingang der Leuchtdichte-Mischschaltung des Anzeigegeräts angeschlossen ist.

6. Einrichtung nach Anspruch 5, dadurch gekennzeichnet, dass die Kurzschlusseinheit einen Transistor (T) umfasst, dessen Basis der Steuereingang des Geräts ist, und der Emitter an den Ausgang der 8. Stufe (B8) der Verschiebungsschaltung angeschlossen ist und der Sammler über eine Diode (D) mit dem Eingang der Leuchtdichte-Mischschaltung der Anzeigevorrichtung verbunden ist.

0 010 488

Fig:1

Fig:2

Fig:3